# EUROPÄISCHE PATENTANMELDUNG

(11) **EP 0 736 960 A1**
(43) Veröffentlichungstag der Anmeldung: **09.10.1996**
(21) Anmeldenummer: 96104611.7
(22) Anmeldetag: 22.03.1996
(51) Int. Cl.: H02P 5/08, A01D 69/02

(54) **Drehzahlregler für elektromotorisch angetriebene Gartengeräte**

(30) Priorität: 05.04.1995 DE 19512784
(71) Anmelder: WOLF-Geräte GmbH Vertriebsgesellschaft KG, D-57518 Betzdorf/Sieg (DE)
(72) Erfinder: Held, Peter, 57584 Scheuerfeld (DE); Le Bihan, Bernhard, 57581 Katzwinkel (DE); Pfau, Ulrich, 57567 Daaden (DE)
(74) Vertreter: Koch, Günther, Dipl.-Ing.

(57) **Zusammenfassung**

Der elektrische Antriebsmotor eines batteriegetriebenen Rasenmähers wird durch einen Zweipunkt-Regler lastunabhängig in seiner Drehzahl geregelt. Zu diesem Zweck ist ein Fliehkraftregler vorgesehen, der direkt, oder bevorzugt indirekt, über einen elektronischen Leistungsschalter den Motorstrom an- und abschaltet. Dieser Fliehkraftschalter (16,20) ist in einem Gehäuse (24) untergebracht, das auf der Stirnseite des Motors aufgesetzt ist, die jener Stirnseite entgegengesetzt ist, aus der die das Werkzeug antreibende Welle vorsteht. Der Reglerhebel (30) ist als Winkelhebel ausgebildet und trägt ein auf Schaltkontakte einwirkendes Druckstück (38), welches in der Motorachse liegt und auf die Schaltkontakte einwirkt. Hierdurch ist nur eine punktweise Berührung zwischen Druckstück und Schaltkontakten gegeben.

## Beschreibung

Die Erfindung bezieht sich auf einen Drehzahlregler für elektromotorisch angetriebene Gartengeräte, insbesondere für batteriegespeiste Rasenmäher, bei welchem ein auf die IST-Drehzahl ansprechendes Schaltglied bei Erreichen einer SOLL-Drehzahl den Motorstrom schaltet.

Derartige Regler sind insbesondere bei batteriegespeisten Motoren zur optimalen Ausnutzung der zur Verfügung stehenden Energie, aber auch zum Erreichen eines optimalen Arbeitsergebnisses (Schnittbild) und zur Verminderung des Arbeitsgeräusches erforderlich.

Herkömmliche Regler erfassen die IST-Drehzahl der Motorwelle über Tachogeneratoren, Impulsgeber oder über die Auswertung des Motorstroms. Zur Konstanthaltung der Drehzahl, auch bei sich änderndem Leistungsbedarf, werden komplexe elektronische Schaltungselemente benötigt.

Der Erfindung liegt die Aufgabe zugrunde, einen einfach aufgebauten Drehzahlregler zu schaffen, der kostengünstig in elektromotorisch angetriebene Gartengeräte und ähnliche Antriebe eingebaut werden kann.

Gelöst wird die gestellte Aufgabe durch die im Kennzeichnungsteil des Anspruchs 1 angegebenen Merkmale.

Fliehkraftregler sind zwar seit langer Zeit bekannt. Sie wurden bereits früher zur Einstellung der Dampfzufuhr bei Dampfmaschinen oder auch zur Einstellung der Brennstoffzuführung bei Brennkraftmaschinen benutzt. Der vorliegenden Erfindung liegt die Erkenntnis zugrunde, daß das Prinzip der fliehkraftabhängigen Schaltung mit Vorteil auch zur Drehzahlregelung von elektrischen Antriebsmotoren ausgenutzt werden kann. Bei Motoren geringer Leistung kann der Fliehkraftschalter den Motorstrom direkt schalten. Bei größeren Leistungen ist es zweckmäßig, die Schaltung über Relais, insbesondere über elektronische Schaltglieder, vorzunehmen.

Die Drehzahlregelung kann dadurch bewirkt werden, daß über den Fliehkraftschalter über geeignete Schaltungsanordnungen der Motorstrom bzw. die Motorspannung auf die jeweils erforderliche Größe eingestellt wird. Ein besonders einfacher und bevorzugter Aufbau ergibt sich durch Ausbildung des Reglers als Zweipunktregler, d.h. bei Erreichen einer ersten Drehzahl wird der Motorstrom abgeschaltet und bei Unterschreiten der Drehzahl erfolgt jeweils eine Wiederanschaltung des Stromes, wobei die Schaltfrequenz durch entsprechende Bemessung der Hysterese eingestellt werden kann.

Ein erfindungsgemäß ausgebildeter Fliehkraftschalter kann auf einfache Weise auf jeden Elektromotor angebaut werden, bei dem die Motorwelle an ihrem, den angetriebenen Werkzeugen gegenüberliegenden Ende, über das Motorgehäuse vorsteht. Auf dieses vorstehende Ende der Motorwelle kann ein Reglergehäuse fixiert werden, das einen als Winkelhebel ausgebildeten Reglerhebel um eine die Motorwelle senkrecht kreuzende Achse lagert, wobei der parallel zur Motorachse liegende Teil des Hebels das Fliehgewicht bildet oder ein solches aufnimmt, und der die Motorachse senkrecht schneidende Arm in der Motorachse einen Kontaktkegel trägt, der auf Kontaktfedern einwirkt, die im Steuerkreis des Relais liegen. Dadurch, daß der die Kontaktierung bewirkende Kegel in der Motorachse liegt, wird die Berührung zwischen den feststehenden Kontaktfedern und dem umlaufenden Reglerarm punktförmig begrenzt.

Stattdessen könnte die Schaltung auch berührungslos erfolgen, indem der Fliekraftregler beispielsweise auf Reedkontakte in der Steuerleitung einwirkt, oder indem man den Hall-Effekt ausnutzt.

Aus Gründen des einfachen Aufbaus ist jedoch die vorstehend beschriebene mechanische Kontaktgabe zu bevorzugen, die sich durch die Einfachheit ihres Aufbaus, aber auch durch ihre Betriebssicherheit und lange Lebensdauer auszeichnet.

Nachstehend wird ein Ausführungsbeispiel der Erfindung anhand der Zeichnung beschrieben. In der Zeichnung zeigen:
Fig. 1 ein schematisches Schaltbild des erfindungsgemäßen Drehzahlreglers;
Fig. 2 eine Schnittansicht eines auf eine Motorstirnseite aufgesetzten Fliehkraftschalters;
Fig. 3 das Gehäuse des Fliehkraftschalters in verschiedenen Ansichten;
Fig. 4 verschiedene Ansichten des Fliehkraft-Reglerhebels.

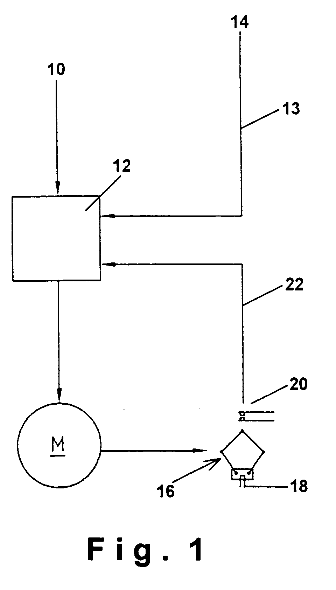

Gemäß Fig. 1 ist ein Motor M, dessen Drehzahl geregelt werden soll, über einen elektronischen-Leistungsschalter 12 an eine Spannungsquelle 10 angeschaltet. An den elektronischen Leistungsschalter 12 ist über eine erste Steuerleitung 13 ein Handschalter 14 angeschlossen. Ein auf der Welle 18 des Motors M sitzender Fliehkraftregler 16 wirkt auf Schaltkontakte 20 ein, die über eine zweite Steuerleitung 22 mit dem elektronischen Leistungsschalter 12 verbunden sind. Die Anordung ist dabei so getroffen, daß bei Überschreiten einer vorbestimmten Drehzahl die Schaltkontakte 20 geöffnet werden (führt zu einer Verminderung der Drehzahl) und bei Unterschreiten einer vorbestimmten Drehzahl die Schaltkontakte 20 geschlossen werden, was zu einer Erhöhung der Drehzahl führt.

Vorzugsweise ist der in Fig. 1 dargestellte Regler als Zweipunktregler ausgebildet, d.h. durch Schließen der Kontakte 20 wird der Motor M an Spannung gelegt, und beim Unterbrechen der Kontakte 20 wird über den Leistungsschalter 12 die Stromzufuhr nach dem Motor M unterbrochen.

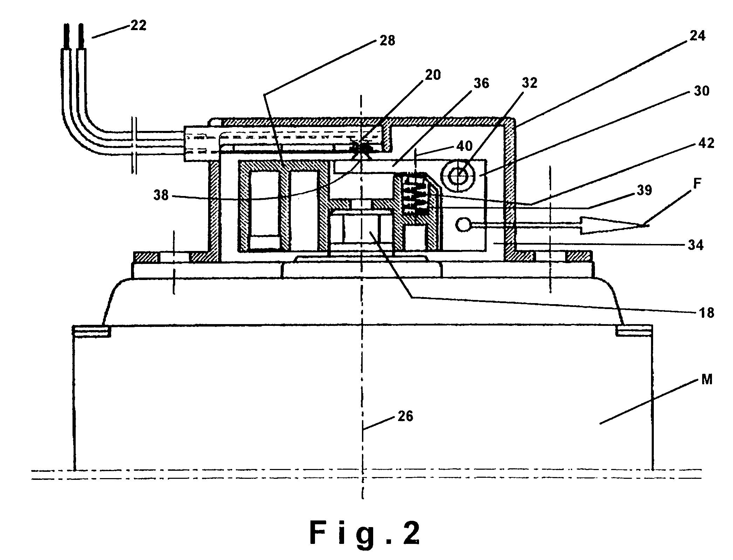

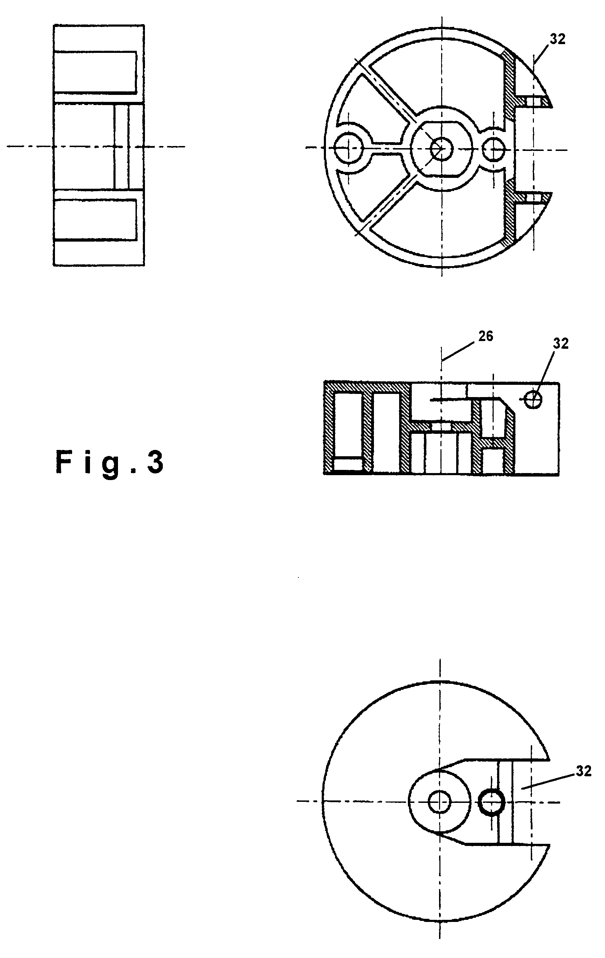

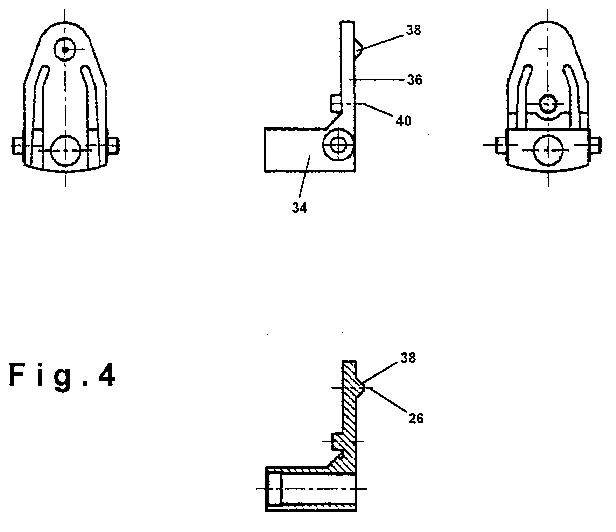

Die Fig. 2 bis 4 zeigen ein bevorzugtes Ausführungsbeispiel des in der Regelschaltung zu benutzenden Fliehkraftschalters. Auf eine Stirnseite des Motors M ist ein Kontaktgehäuse 24 aufgesetzt, welches die Schaltkontakte 20 übereinanderliegend in der Motorachse 26 trägt. Die Schaltkontakte 20 sitzen an Kontaktfedern, die sich radial im Gehäuse 24 erstrecken, und an denen die zweite Steuerleitung anschließt. Auf der Motorwelle 18, die aus der Stirnseite des Motorgehäuses vorsteht, ist ein Reglergehäuse 28 drehfest aufgesetzt. Dieses Reglergehäuse 28, welches kreisrund ausgebildet ist, läuft koaxial innerhalb des Kontaktgehäuses 24 um. Im Reglergehäuse 28 ist ein als Winkelhebel ausgebildeter Reglerhebel 30 um eine die Motorachse 26 senkrecht kreuzende Achse 32 schwenkbar gelagert. Der parallel zur Motorwelle 26 verlaufende Arm 34 bildet das Fliehgewicht oder trägt ein bezüglich seiner Masse einstellbares Fliehgewicht. Der andere Arm 36 des Winkelhebels verläuft quer zur Motorachse 26 und trägt ein kegelförmig ausgebildetes Druckstück 38, welches vom Motor weggerichtet ist und dessen Spitze in der Motorachse 26 liegt. Dieses Druckstück 38 wirkt auf die Schaltkontakte 20 in der oben beschriebenen Weise ein. In einem Sackloch 39, dessen Achse 40 parallel zur Motorwelle 26 angeordnet ist, ist eine als Druckschraubenfeder ausgebildete Reglerfeder 42 eingesetzt, deren freies Ende gegen den Arm 36 des Reglerhebels 30 wirkt und den Reglerhebel im Sinne einer Schließbewegung der Schaltkontakte 20 vorspannt. Während des Laufs des Motors wirkt auf den Arm 34 des Reglerhebels 30 die Fliehkraft, und beim Überschreiten einer vorbestimmten Drehzahl wird der Reglerhebel 30 gemäß Fig. 2 im Gegenuhrzeigersinn verschwenkt, wodurch die Kontakte 20 geöffnet werden.

Wie ersichtlich, wirkt das Druckstück 38 in der Motorachse 26, so daß zwischen der umlaufenden Spitze des Kegels des Druckstücks 38 und dem Schaltkontakt lediglich eine punktweise Berührung mit geringer Reibung stattfindet.

### Bezugszeichenliste

- M: Motor
- 10: Spannungsquelle
- 12: el.Leistungsschalter
- 13: erste Steuerleitung
- 14: Handschalter
- 16: Fliehkraftschalter
- 18: Motorwelle
- 20: Schaltkontakte
- 22: zweite Steuerleitung
- 24: Kontaktgehäuse
- 26: Motorachse
- 28: Reglergehäuse
- 30: Reglerhebel
- 32: Achse
- 34: Arm
- 36: Arm
- 38: Druckstück
- 39: Sackloch
- 40: Achse
- 42: Reglerfeder
- F: Fliehkraft

## Patentansprüche

1. Drehzahlregler für elektromotorisch angetriebene Gartengeräte, insbesondere für batteriegespeiste Rasenmäher, bei welchem ein auf die IST-Drehzahl ansprechendes Schaltglied bei Erreichen einer SOLL-Drehzahl den Motorstrom schaltet,
dadurch gekennzeichnet, daß das Schaltglied als Fliehkraftschalter (16, 20) ausgebildet ist.

2. Drehzahlregler nach Anspruch 1,
dadurch gekennzeichnet, daß der Fliehkraftschalter (16, 20) den Steuerkreis (22) eines Relais (12) schaltet.

3. Drehzahlregler nach Anspruch 2,
dadurch gekennzeichnet, daß das Relais als elektronisches Schaltglied ausgebildet ist.

4. Drehzahlregler nach den Ansprüchen 1 bis 3,
dadurch gekennzeichnet, daß der-Regler als Zweipunkt-Regler ausgebildet ist und den Motorstrom über den elektronischen Leistungsschalter (12) abwechselnd an- und abschaltet.

5. Drehzahlregler nach den Ansprüchen 1 bis 4,
dadurch gekennzeichnet, daß der Fliehkraftschalter (16) ein kreisringförmig ausgebildetes Reglergehäuse (28) aufweist, das drehfest auf der Motorwelle (18) sitzt und einen als Winkelhebel ausgebildeten Reglerhebel (30) um eine die Motorachse (26) senkrecht kreuzende Achse (32) schwenkbar aufweist.

6. Drehzahlregler nach Anspruch 5,
dadurch gekennzeichnet, daß der Reglerhebel (30) einen parallel zur Motorachse (26) verlaufenden, das Fliehgewicht bildenden oder tragenden Arm (34) und einen auf die Schaltkontakte (20) einwirkenden, senkrecht zur Motorwelle (26) verlaufenden Arm (36) aufweist.

7. Drehzahlregler nach Anspruch 6,
dadurch gekennzeichnet, daß der Arm (36) des Reglerhebels (30) auf der der Motorstirnseite abgewandten Seite ein Druckstück (38) trägt, das in Gestalt eines Kegels ausgebildet ist, dessen Kegelachse mit der Motorachse (26) zusammenfällt.

8. Drehzahlregler nach den Ansprüchen 5 bis 7,
dadurch gekennzeichnet, daß das Reglergehäuse (28) von einem Kontaktgehäuse (24) umschlossen ist, welches auf der Motorstirnseite festgelegt ist.

9. Drehzahlregler nach den Ansprüchen 5 bis 8,
dadurch gekennzeichnet, daß das Kontaktgehäuse (24) die Schaltkontakte (20) trägt, die längs der Motorachse (26) beweglich und durch das Druckstück (38) betätigbar sind.

10. Drehzahlregler nach den Ansprüchen 5 bis 9,
dadurch gekennzeichnet, daß in einem Sackloch (39) des Reglergehäuses (28) eine Reglerfeder (42) angeordnet ist, die auf den Arm (36) des Reglerhebels (30) entgegen der Fliehkraft (F) einwirkt.
